# EUROPEAN PATENT APPLICATION

(11) **EP 1 710 108 A2**
(43) Date of publication of application: **11.10.2006**
(21) Application number: 06251978.0
(22) Date of filing: 07.04.2006
(51) Int. Cl.: B60J 5/06

(54) **Curtain assembly for curtain-sided vehicle**

(30) Priority: 07.04.2005 GB 0507043
(71) Applicant: Schmitz Cargobull (UK) Limited, Stanley Co Durham DH9 8HJ (GB)
(72) Inventor: Avery, Paul, Brandon Durham DH7 8TT (GB)
(74) Representative: Archer, Graham John

(57) **Abstract**

A curtain assembly for a curtain-sided vehicle is described and includes a sheet material for covering an opening (16) in a vehicle. Along one edge (34) of the sheet there are first connectors (18) for connecting the sheet material to a rail (20) adjacent a first edge of the opening. The first connector has a guide (21,22) adapted to be slidably engaged with the rail and has a spring (32) to connect the guide and the sheet material. The assembly also has a second connector (36) for connecting the sheet material to a second edge of the opening which is opposite the first edge. The second connector has a tension adjuster which is adapted to cooperate with the spring to adjust tension in the sheet material between corresponding said first and second connectors.

## Description

The present invention relates to a curtain assembly for a curtain-sided vehicle and relates particularly, but not exclusively, to curtains for use on vehicles whose open side has no supporting vertical beams.

The use of a tarpaulin curtain to enclose the side of a large van or heavy goods vehicle is well known and such vehicles are particularly common in the United Kingdom. The curtain is used to cover one or both of the long vertical sides of the container compartment of the vehicle. Where these sides are particularly long, vertical support beams are used to provide support for the upper horizontal beam to which the curtain is connected.

Typically the curtain is hung on slidable upper connectors which slide within a rail attached to the upper beam allowing the curtain to be extended along the whole length of the side of the vehicle or compacted towards one end of the beam, thereby allowing access to the interior of the container compartment. Where vertical supports are required, these supports restrict the access to the inside of the container compartment and are therefore often provided in a removable form allowing access to the full length of the inside of the container compartment.

It is therefore desirable to provide the container compartment without such supports. However, this has in the past caused difficulties since the upper beam must be reinforced in order to prevent it bending under the force of the tension applied to the curtain. Such reinforced beams are undesirable since they add significant weight to the vehicle and create difficulties in the manufacture of the container compartment. Where a reinforced beam is not used, the bending of the beam has proved to be the problem particularly where a hook and strap type connector are used. In this hook and strap type attachment, the hook attaches to part of the body of the vehicle and the strap is used to create tension in the curtain so that it does not flap and come undone when the vehicle is moving. However, as more and more of the straps and hooks are connected and tightened, the increase in tension along the length of the curtain causes the upper rail to sag which can result in some of the first few hooks and straps connected to become loose.

In an alternative form of curtain connector both the top and bottom edges of the curtain are connected to respective upper and lower rails by slidable connectors having springs therein. These springs help to maintain the tension in the curtain and help to prevent the slidable connectors becoming jammed when the curtain is being slid into a retracted position.

In a further type of curtain of the prior art, a sprung loaded slidable connector is attached to a top rail and a hidden lower connector locked into engagement with a lower edge portion of the opening in the vehicle. This mechanism is designed to provide a hidden lower attachment and therefore a more aesthetically pleasing external surface to the vehicle. The lower connector has no tension adjustment and therefore suffers from the disadvantage that in order to adjust the tension in the curtain it is necessary to make adjustments to the compression of the spring in the connector.

Preferred embodiments of the present invention seek to overcome the above described disadvantages of the prior art.

According to the present invention there is provided a curtain assembly for a curtain-sided vehicle, the assembly comprising:-
a sheet material for covering an opening in a vehicle;
at least one first connector for connecting said sheet material to at least one rail adjacent a first edge of said opening, at least one said first connector having at least one guide adapted to be slidably engaged with the or each rail and having at least one biasing device adapted to be connected between at least one said guide and said sheet material; and
at least one second connector for connecting said sheet material to a portion of the vehicle adjacent a second edge of said opening opposing said first edge, at least one said second connector having at least one tension adjuster, wherein at least one said tension adjuster is adapted to cooperate with at least one respective biasing device to adjust tension in the sheet material between corresponding said first and second connectors.

By providing a curtain assembly with a biased upper connector and with a lower connector with tension adjustment, the advantage is provided that the spring mechanism is able to adjust the tension in each portion of the curtain as the tension adjusting device, typically a hook and strap attachment, is pulled into greater tension. As a result, the overall loading of the upper beam is evenly distributed across the entire length of the beam and is maintained within predetermined limits which cannot be exceeded by over tightening of the straps, unless the spring is pulled into complete compression. Therefore, a curtain-sided vehicle having a long length of container can be provided with the simple form of hook and strap lower connectors, which are well known and popular with operators whilst not requiring the additional support of vertical support beams at intervals along the length of the horizontal upper beam or reinforcement of the horizontal support beam. Since the use of the biased upper connectors means that the tension in the hook and strap tension adjusting connector cannot be easily over tightened, the tension along the length of the curtain is maintained more consistently. This reduces the likelihood of accidental damage resulting from over-tightening of the curtain.

In a preferred embodiment at least one said second connector comprises at least one retainer for engagement with said portion of said vehicle.

In another preferred embodiment said sheet material comprises at least one tarpaulin.

At least one of the guides may comprise at least one wheel adapted to run in a channel in the or each rail.

In a preferred embodiment an increase in the tension in the curtain resulting from adjustment of the tension adjuster causes compression of at least one said biasing device.

At least one of the biasing devices may comprise at least one spring.

In a preferred embodiment at least one said retainer comprises at least one hook.

In another preferred embodiment at least one said tension adjuster comprises at least one strap.

A preferred embodiment of the present invention, will now be described, by way of example only, and not in any limitative sense, with reference to the accompanying drawings in which:-
Figure 1 is a perspective view of a section of supporting beam and rail of the present invention;
Figure 2 is a perspective view including a connector attached to the rail of Figure 1; and
Figure 3 is a perspective view showing further connectors of the present invention.

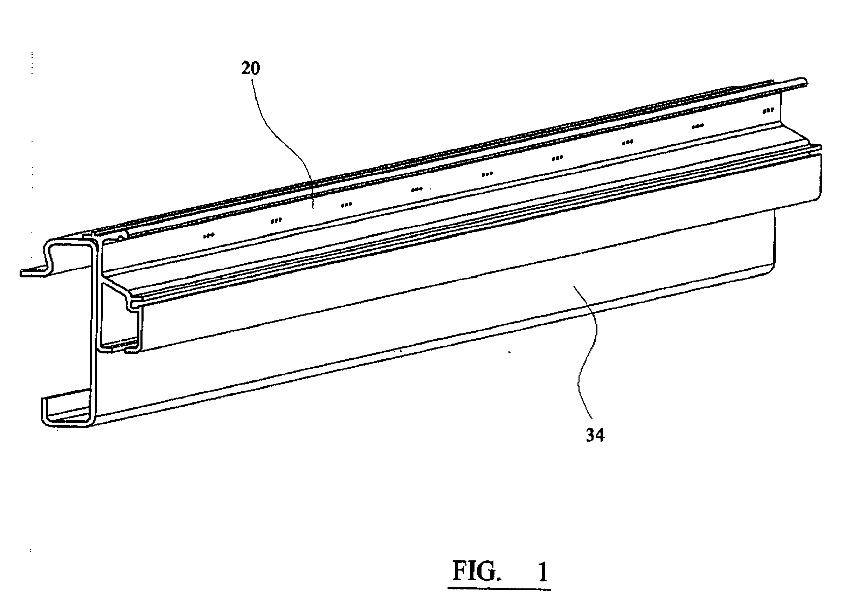

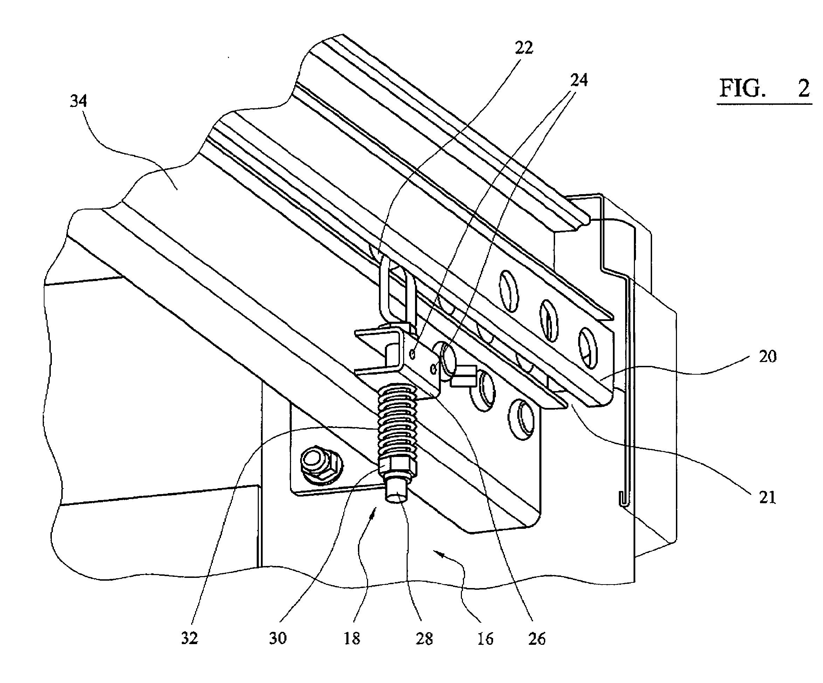

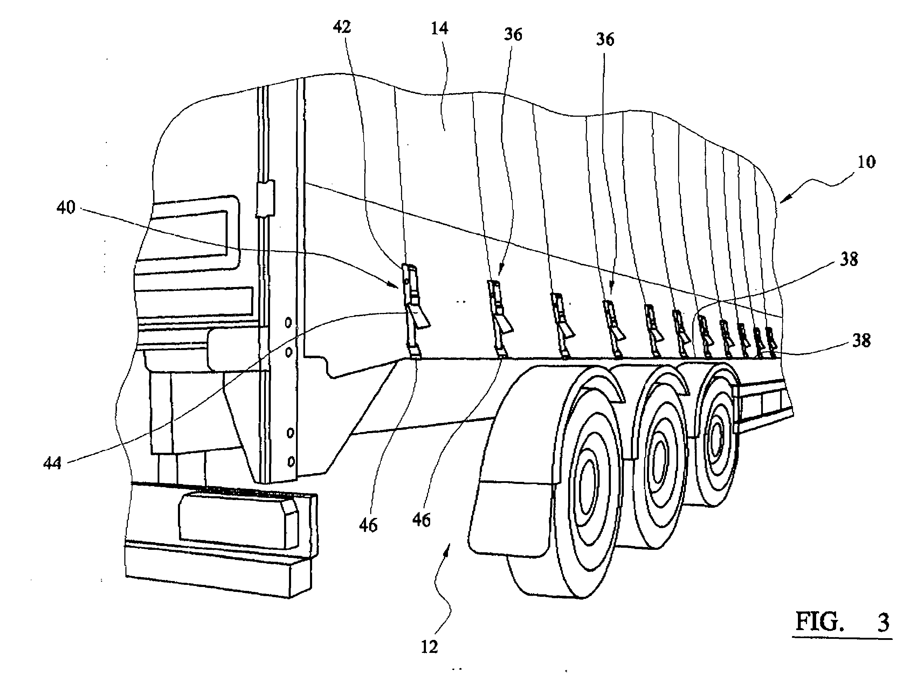

Referring to Figures 1, 2 and 3, a curtain assembly 10 for a curtain sided vehicle has a sheet 14 for covering an opening 16 in a container compartment of vehicle 12. The curtain assembly 10 also has a first connector 18 which connects the sheet material 14 to a rail 20 which is adjacent a first or upper edge of the opening 16. The connector 18 has guide wheels 22 which run in channel 21 and allow the connector 18 to be slidably engaged with rail 20. The sheet 14 is attached to the connector 18 by use of studs or bolts (not shown) which extend through apertures 24. The apertures 24 are located in a U-shaped member 26 which is slidably mounted on a pin 28. The lower end of pin 28 has a threaded portion onto which a retaining nut 30 is located. Between the slidably mounted U-shaped member 26 and retaining nut 30 a spring 32 is located baising U-shaped member away from nut 30. Rail 20 is attached to horizontal support beam 34 which forms part of the roof of the container compartment.

The curtain assembly also has at least one second connector 36 which connects sheet material 14 to a portion of vehicle 12 (a beam forming part of the floor of the container of the vehicle indicated at 38) which is adjacent a second edge of opening 16. The second edge is the edge of the opening formed by the floor of the container and is opposite the first edge which forms part of the roof. Second connectors 36 have tension adjusters 40 in the form of buckles 42 and straps 44. The strap 44 connects to the floor 38 by hooks 46.

In use, a container compartment on a vehicle is constructed with a support beam 34 having a rail 20 attached thereto and a series of connectors 18 have their roller guides 22 located within channel 21. A sheet 14 is attached to connector 18 via apertures 24 in U-shaped member 26. When the vehicle is to be driven the curtain is extended to cover opening 16. The second connectors 42 are attached to a lower portion 38 of the container by engaging hooks 46 with portion 38. The straps are pulled so as to create a tension in sheet 14 between first connector 18 and second connector 40. As strap 44 is pulled taught the tension in sheet 14 is increased. However, this causes the U-shaped 32 to compress spring 32. As a result, the tension in sheet 14 is evenly distributed along the whole length of rail 20 and beam 34 and as a result beam 34 does not significantly bend. The tension in spring 32 can be adjusted by rotation of nut 30 on the threaded portion of pin 28.

It would be appreciated by persons skilled in the art that the above embodiment has been described by way of example only, and not in any limitative sense, and that various alterations and modifications are possible without departure from the scope of the invention as defined by the appended claims.

## Claims

1. A curtain assembly for a curtain-sided vehicle, the assembly comprising:-
a sheet material for covering an opening in a vehicle;
at least one first connector for connecting said sheet material to at least one rail adjacent a first edge of said opening, at least one said first connector having at least one guide adapted to be slidably engaged with the or each rail and having at least one biasing device adapted to be connected between at least one said guide and said sheet material; and
at least one second connector for connecting said sheet material to a portion of the vehicle adjacent a second edge of said opening opposing said first edge, at least one said second connector having at least one tension adjuster, wherein at least one said tension adjuster is adapted to cooperate with at least one respective biasing device to adjust tension in the sheet material between corresponding said first and second connectors.

2. As assembly according to claim 1, wherein at least one said second connector comprises at least one retainer for engagement with said portion of said vehicle.

3. An assembly according to claim 1 or 2, wherein said sheet material comprises at least one tarpaulin.

4. An assembly according to any one of the preceding claims, wherein at least one said guide comprises at least one wheel adapted to run in a channel in the or each rail.

5. An assembly according to any one of the preceding claims, wherein an increase in the tension in the curtain resulting from adjustment of the tension adjuster causes compression of at least one said biasing device.

6. An assembly according to any one of the preceding claims, wherein at least one said biasing device comprises at least one spring.

7. An assembly according to any one of the preceding claims, wherein at least one said retainer comprises at least one hook.

8. An assembly according to any one of the preceding claims, wherein at least one said tension adjuster comprises at least one strap.

9. A curtain assembly for a curtain-sided vehicle substantially as hereinbefore described with reference to the accompanying drawings.
